# EUROPÄISCHE PATENTSCHRIFT

(11) **EP 1 082 044 B1**
(45) Veröffentlichungstag und Bekanntmachung des Hinweises auf die Patenterteilung: **04.12.2002**
(21) Anmeldenummer: 99922029.6
(22) Anmeldetag: 01.06.1999
(51) Int. Cl.: A47J 31/20, A47J 31/52

(54) **VORRICHTUNG ZUM BRÜHEN VON GETRÄNKEN**
DEVICE FOR INFUSING DRINKS
DISPOSITIF POUR FAIRE INFUSER DES BOISSONS

(30) Priorität: 02.06.1998 CH 119498
(43) Veröffentlichungstag der Anmeldung: 14.03.2001
(73) Patentinhaber: Fritschi, Isidor, 8540 Andelfingen (CH)
(72) Erfinder: Fritschi, Isidor, 8540 Andelfingen (CH)
(74) Vertreter: Felber, Josef
(86) Internationale Anmeldenummer: CH9900237
(87) Internationale Veröffentlichungsnummer: WO99062388

(56) Entgegenhaltungen:
- EP-A- 0 094 368
- WO-A-95/07648
- DE-A- 2 758 184
- DE-A- 2 904 569
- DE-A- 4 432 547

## Beschreibung

Diese Erfindung betrifft eine Vorrichtung zum Brühen von Getränken, sei es in Einzelportionen oder für mehrere Portionen zusammen. Im besonderen ist dabei an das Brühen von Tee in all seinen Varianten gedacht. Die Vorrichtung kann hingegen auch zum Brühen anderer Getränke eingesetzt werden.

Herkömmlich wird der Tee mittels verschiedener Methoden zubereitet. Nebst der Brühwassertemperatur und der Beschaffenheit und Qualität des Tees sowie dem Verhältnis von Teemenge und Brühwasser ist dabei stets die Brühdauer die entscheidende und wichtigste Einflussgrösse für die geschmackliche Qualität des Tees. Besonders zutreffend ist dies beim Schwarztee. Jeder Teeliebhaber ist sich dieser Tatsache bewusst. Er wird sich beim Brühen von Tee mit grösster Aufmerksamkeit der Brühzeit widmen. Die Konzentration auf die Brühzeit hat den Nachteil, dass während dieser Zeit die Möglichkeiten für andere Tätigkeiten eingeschränkt sind.

Der Tee wird üblicherweise zubereitet, indem ein durchlässiger Brühkörper, zum Beispiel ein zweiteiliger, perforierter Blech-Hohlkörper, der an einer Kette hängt, mit Tee gefüllt und anschliessend in das sich im Teeglas oder der Teetasse befindliche, erhitzte Wasser gehängt wird. Nach Ablauf der gewünschten Brühzeit wird der Brühkörper an der Kette aus dem Teeglas oder der Teetasse herausgezogen und der Tee ist sodann bereit zum Trinken. Oftmals wird zur Überwachung der Brühzeit ein elektronischer Küchen-Timer zu Hilfe genommen, wie er auch für das Kochen von Eiern oder das Backen von Kuchen usw. eingesetzt wird. An diesem Timer wird dann die Brühzeit eingestellt, wonach er gestartet wird. Nach Ablauf der eingestellten Zeitperiode, wenn also die Brühzeit abgelaufen ist, gibt der Timer dann ein akustisches Signal ab und man kann den Brühvorgang unterbrechen. Steht man aber nicht in unmittelbarer Umgebung des Timers, so kann sein Signal überhört werden, und dann bleibt der Tee unweigerlich zu lange im Brühwasser. Eine andere Methode des Zubereitens von Tee besteht darin, dass man einen abgepackten Teebeutel aus Papier in das Trinkgefäss mit dem heissen Wasser taucht und diesen dann gleichermassen nach der idealen Brühzeit wieder herausnimmt. Hierzu sind diese Teebeutel oft mit einem Faden verbunden, dessen Ende zum Beispiel eine Etikette trägt, sodass der Faden mit der Etikette nach aussen über den Rand des Trinkgefässes gehängt werden kann. Auch hier jedoch muss die Brühzeit irgendwie überwacht werden und es ist wichtig, genau nach Ablauf der Brühzeit zu handeln, das heisst die Teeblätter vom Brühwasser zu trennen und somit das Brühen abzuschliessen. Überwacht man das Brühen nicht sorgfältig und lässt sich zum Beispiel ablenken, so wird die Brühzeit oft überschritten und der Tee wird geschmacklich negativ beeinträchtigt. Es ist nun aber lästig, sich auf eine an und für sich elementare Tätigkeit wie die Zeitmessung speziell konzentrieren zu müssen und den Ablauf der nötigen Zeitdauer einfach überwachend abwarten zu müssen.

Abhilfe schaffen elektrische Geräte, bei denen unter anderem die Brühzeit eingestellt werden kann und die dann automatisch den Brühvorgang unterbrechen. Elektrische Geräte aber haben den Nachteil, dass sie erstens einen Stromanschluss benötigen, zweitens dass ihre Bedienung oftmals erklärungsbedürftig ist und für Leute, welche die Geräte nicht regelmässig benützen, oftmals zu kompliziert ist, und drittens dass sie schliesslich recht teuer in der Anschaffung sind. Im übrigen passen elektrische Brühgeräte nicht so recht zum Image des passionierten Teetrinkers. Es sind verschiedene nicht-elektrische Vorrichtungen zum Brühen von Getränken vorgeschlagen worden, welche nach Ablauf der Brühzeit den Brühvorgang selbsttätig stoppen. Aus der DE 29 04 569 ist zum Beispiel eine Vorrichtung zur Wählbarkeit der Brühzeit für Heissgetränke bekannt geworden, die einen schwimmfähigen Teebehälter im Innern des Brühgefässes aufweist, sowie eine dem Auftrieb dieses Teesiebschwimmers entgegenwirkende Verankerung am Boden des Brühgefässes. Ein auf Wärme reagierendes Stellglied, zum Beispiel ein Ausdehnungsbalg oder ein Bimetall, löst die Verankerung, wonach der schwimmfähige Teebehälter aufschwimmt und somit das Brühgut vom Sud trennt. Die Realisierung eines sicher arbeitenden Stellgliedes erweist sich jedoch als aufwendig. WO95/07648 offenbart ein Getränke-Brühverfahren für die Zubereitung von Tassenportionen von Kaffee in Münzautomaten. Das Verfahren arbeitet mit zwei beabstandet ineinandergestellten Behältern, wobei der obere einen doppelten Boden aus Filtermaterial aufweist, zwischen dem gemahlener Kaffee eingeschlossen ist, und der untere als Einwegtasse dient. Das heisse Wasser rinnt durch das Filtermaterial und den dazwischen eingeschlossenen gemahlenen Kaffee und tropft in die Tasse. Wenn der Pegel bis zum Filtermaterial angestiegen ist, beginnt der obere Behälter zu schwimmen, bis zwischen dem darin befindlichen heissen Wasser und dem Kaffee in der Tasse und somit ausserhalb des oberen Behälters ein hydrostatischer Ausgleich erzielt ist. Dieses Verfahren ist für den Betrieb in Automaten gedacht und eignet sich nicht als einfache Vorrichtung für das Zubereiten von einzelnen Tassen Tee zuhause oder im Büro.

Ausgehend von diesem Stand der Technik liegt der Erfindung die Aufgabe zugrunde, eine vereinfachte Vorrichtung zum Brühen von Getränken zu schaffen. Erstens soll mit dieser Vorrichtung nach Ablauf der Brühzeit nicht gehandelt werden müssen, sondern das Stoppen des Brühvorgangs soll selbsttätig erfolgen, sodass man sich nach dem Starten des Brühvorganges ohne weiteres auch von der Vorrichtung entfernen kann, ohne ein zu langes Brühen zu riskieren. Weiter sollen verschiedene Brühzeiten einstellbar sein, und der Aufbau sowie die Bedienung des Gerätes sollen so einfach wie nur möglich sein, sodass seine Funktion selbsterklärend ist und von jedermann sofort begriffen wird.

Diese Aufgabe wird gelöst von einer Vorrichtung zum Brühen von Getränken nach dem Oberbegriff des Patentanspruches 1 mit dessen kennzeichnenden Merkmalen.

In den Zeichnungen sind Varianten der Vorrichtung als Ausführungsbeispiele dargestellt. Anhand dieser Zeichnungen werden diese Vorrichtungen nachfolgend im einzelnen beschrieben und deren Funktion wird erklärt.
Es zeigt:
- Figur 1:: Eine erste Ausführungsvariante der Vorrichtung mit einem Sanduhrähnlichen Beschwerungskörper in einem Querschnitt dargestellt, in Ausgangsposition vor dem Starten des Brühvorganges;
- Figur 2:: Die Ausführungsvariante nach Figur 1 im Querschnitt dargestellt, im Verlaufe des Brühvorganges;
- Figur 3:: Die Ausführungsvariante nach Figur 1 im Querschnitt dargestellt, nach Vollendung des Brühvorganges, nach weitgehend oder vollständig vollzogener Trennung von Brühflüssigkeit und Brühgut;
- Figur 4:: Eine perspektivische Darstellung des Beschwerungskörpers sowie des Einsatzringes mit der Kulisse für das Einstellen der Brühzeit;
- Figur 5:: Eine auf den Rand des Brühgefässes und dessen Einsatzring aufsteckbare Wippe zu einem Beschwerungskörper;
- Figur 6:: Eine erste alternative Lösung mit immer gleicher Anwendung des Beschwerungskörpers, jedoch mit verschiedenen, einstellbaren Auftriebskräften für das Brühsieb, in Ausgangsposition;
- Figur 7:: Eine zweite alternative Lösung mit einem Beschwerungskörper in Form eines mit Wasser gefüllten Gefässes in einem Querschnitt dargestellt ist, beim Starten des Brühvorganges;
- Figur 8:: Eine verfeinerte Ausführungsvariante der Vorrichtung mit .einem Flüssigkeitsbehälter als Beschwerungskörper in einem Querschnitt dargestellt, beim Starten des Brühvorganges;
- Figur 9:: Die Ausführungsvariante gemäss Figur 8 in einem Querschnitt dargestellt, kurz vor dem Erreichen des Brühzeitablaufs;
- Figur 10:: Die Ausführungsvariante gemäss Figur 8 in einem Querschnitt dargestellt, nach Ablauf der Brühzeit;

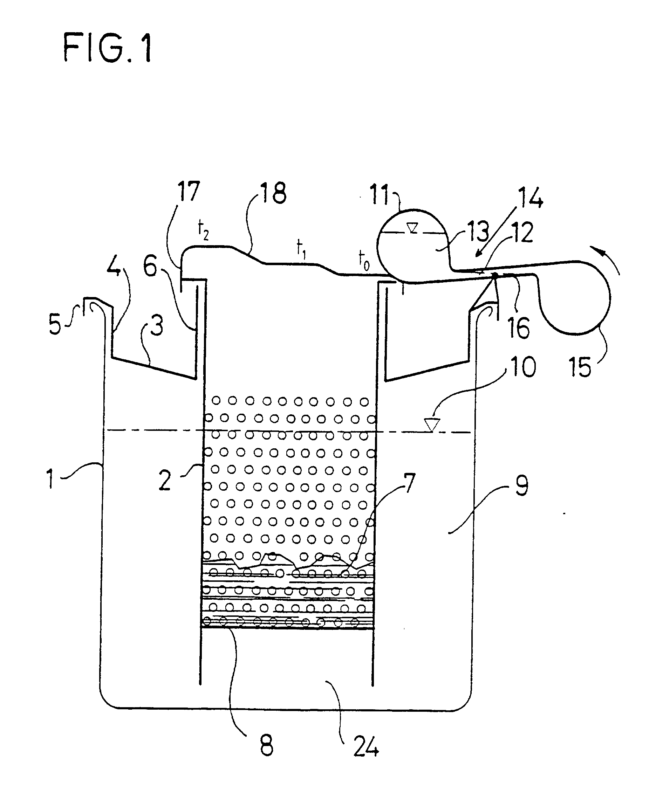

In Figur 1 ist die erste Ausführungsvariante der Vorrichtung gezeigt. Sie besteht aus einem Brühgefäss 1, einem Einsatzring 3 und einem Brühsieb 2, welches hier aus einem wasserdurchlässigen Aufnahmebehälter 2 für die Aufnahme des Brühgutes 7 besteht. Das Brühgefäss selbst kann bei allen Ausführungen eine Teekanne bzw. ein Teekrug oder auch ein einzelnes Trinkgefäss oder anderes Gefäss sein. Das hier zylindrisch gezeichnete Brühgefäss 1 kann also im unteren Bereich auch bauchig ausgeweitet sein und es wird ein Fassungsvolumen von ca. ½ Liter bis ca. 2 Liter aufweisen, wobei noch grössere Volumina denkbar sind. Der Einsatzring 3 weist hier auf seiner äusseren Seite eine Wandung 4 auf, die in einen Rand 5 ausmündet, der gegen aussen hin umgelegt ist, sodass der Einsatzring 3 über den Rand des Brühgefässes 1 gestülpt werden kann, wie das in der Zeichnung gezeigt ist. Auf der Innenseite weist der Einsatzring 3 eine weitere Wandung 6 auf, die einen Hals 6 bildet, welcher als Führung für den in diesen Einsatzring 3 hineingestellten Aufnahmebehälter 2 wirkt. Im Hals 6 ist somit der Aufnahmebehälter 2 auf und ab verschiebbar. Der Aufnahmebehälter 2 besteht vorzugsweise aus Kunststoff oder Blech und ist wasserdurchlässig, indem er zum Beispiel perforiert ist, wie das hier gezeigt ist, oder indem er Schlitze aufweist. Die seitliche Wand des Aufnahmebehälters 2 überragt hier dessen Boden 8 um ein gewisses Mass nach unten. Dadurch ist an seiner Unterseite ein unten offener, seitlich jedoch dichter Hohlraum 24 gebildet, in welchem beim Eintauchen des Brühsiebes 2 Luft eingeschlossen wird. Diese Luftblase erzeugt dann einen auf das Brühsieb 2 wirkenden Auftrieb. Um einen noch grösseren Auftrieb zu erzielen, kann der Hohlraum 24 unter dem Brühsieb 2 so gestaltet werden, dass seine Aussenwände den oberen Durchmesser des Aufnahmebehälters 2 deutlich überragen, sodass er ein entsprechend grösseres Volumen einschliesst. Anstelle eines Hohlraumes kann auch ein Schwimmkörper oder ein geschlossener, qasdichter Hohlraum als separates Teil an den Aufnahmebehälter 2 aufgeklipst oder fest an diesen angebaut sein, um den nötigen Auftrieb zu erzeugen. Das Brühgefäss 1 ist hier mit der Brühflüssigkeit 9 gefüllt, wobei der Pegelstand 10 mit einem Dreieck angegeben ist. Wenn somit der Aufnahmebehälter 2 in die Flüssigkeit eingetaucht ist, so erfährt er wegen der unten eingeschlossenen Luftblase einen Auftrieb und will sich also längs des Halses 6 des Einsatzringes 3 nach aufwärts bewegen. Dieses wird nun mittels eines Beschwerungskörpers 11 unterbunden, der hier auf dem Rand des Aufnahmebehälters 2 oder auf einem auf diesem aufgesetzten Deckel oder Ring ruht. Dieser Beschwerungskörper 11 weist eine Öffnung 12 auf, durch welche das in ihm enthaltene Medium 13 ablassbar ist. Dadurch wird der Beschwerungskörper 11 kontinuierlich erleichtert, bis schliesslich sein Gewicht den Auftrieb des eingetauchten Aufnahmebehälters 2 unterschreitet. Dann vermag der Aufnahmebehälter 2 aufzusteigen und dabei gleichzeitig den Beschwerungskörper 11 anzuheben und im gezeigten Beispiel wegzuschwenken. Der Beschwerungskörper 11 ist nämlich hier als Wippe 14 mit zwei endseitig angeordneten und miteinander über einen Kanal 16 verbundenen Hohlkörpern 11,15 ausgebildet, wobei diese Wippe 14 in der Vertikalebene um den äusseren Rand 5 des Einsatzringes 3 schwenkbar ist. Der dem Brühgefäss 1 zugewandte Hohlkörper 11 beschwert dank seines Inhalts in der Ausgangslage den Aufnahmebehälter 2, und der äussere Hohlkörper 15 ist dann in einer tieferen Position angeordnet, sodass das Medium 13 in den letzteren fliesst oder rinnt. Damit der Einsatzring 3 durch den mittelbar auf ihn wirkenden Auftrieb nicht angehoben werden kann, ist er entweder genügend schwer gefertigt, oder aber mittels Klammern auf den Rand des Brühgefässes aufgeklipst. Beim Füllmedium der Hohlkörper 11,15 kann es sich um beliebiges rinnfähiges Schüttgut oder um eine Flüssigkeit handeln. Vorzugsweise besteht diese Wippe 14 aus einem abgeschlossenen Kunststoff- oder Glaskörper wie er etwa bei Sanduhren zum Einsatz kommt. Die beiden Hohlkörper 11,15 sind dabei einstückig über einen Kanal 16 miteinander verbunden. Auf dem oberen Rand des Aufnahmebehälters 2 oder Brühsiebes 2 ist ein Zeitstellglied in Form eines Ringes 17 mit einer Kulisse 18 aufgesteckt. Die Kulisse 18 wird durch einen verschieden hohen Rand des Ringes 17 gebildet. Dieser Ring 17 kann auf dem Aufnahmebehälter 2 verdreht werden, sodass je nachdem ein Bereich mit höherem oder tieferem Rand 18 der Wippe 14 gegenüberliegt. Im hier gezeigten Beispiel sind drei verschiedene Randhöhen sichtbar. Die mit t₀ bezeichnete Randhöhe definiert eine Ausgangsposition, in welcher das Medium 13 im Hohlkörper 11 bleibt, weil keine Neigung der Wippe 14 vorhanden ist, die es zum Strömen oder Rinnen bringt. Die beiden anderen Randhöhen entsprechen zwei einstellbaren Zeitperioden t₁ und t₂ für die Brühzeit. Wenn der Beschwerungskörper 11 nun mit einem Medium 13 gefüllt in der hier gezeigten Ausgangsposition auf dem Rand mit der Bezeichnung t₀ aufliegt, so ist damit die Ausgangsposition eingestellt, in welcher nichts passiert. Liegt der Beschwerungskörper 11 auf dem Randbereich t₁ auf, so ist das Gefälle der Wippe 14 vom ersten Hohlkörper 11 zum zweiten Hohlkörper 15 minimal. Entsprechend langsam strömt oder rinnt das Medium aus dem Hohlkörper 11 in den Hohlkörper 15, wobei der Hohlkörper 11 natürlich immer leichter wird, bis sein Gewicht schliesslich kleiner als der Auftrieb des Aufnahmebehälters 2 oder Brühsiebes 2 wird. Der Aufnahmebehälter 2 steigt dann auf und hebt damit das Brühgut 7 fast vollständig aus der Brühflüssigkeit, wodurch der Brühvorgang unterbrochen beziehungsweise beendet wird. Dabei wird der Hohlkörper 11 nach oben geschoben und die Wippe 14 wird in der Zeichnung im Uhrzeigersinn weggeschwenkt. Die ganze Wippe 14 ist hier auf den Rand 5 des Einsatzringes 3 aufgesteckt. Zum Starten eines neuen Brühvorganges wird die Wippe 14 weggenommen und zunächst von Hand in die andere Schwenklage gebracht, bis das Medium 13 in den ersten Hohlkörper 11 zurückgeflossen oder geronnen ist. Dann wird Brühwasser ins Brühgefäss 1 gegossen, das Brühgut 7 wird in das Brühsieb, nämlich in den Aufnahmebehälter 2 gelegt, und dieser wird sodann in die Brühflüssigkeit 9 eingetaucht. Dann wird die Wippe 14 gegenüber dem gewünschten Randbereich t₁ oder t₂ des Zeitstellgliedes auf den Rand 5 aufgesteckt und der Hohlkörper 11 wird auf den Rand 18 des Zeitstellgliedes gelegt. Fertig! Alles andere läuft jetzt automatisch ab. Der Anwender braucht weder auf die Uhr zu schauen, noch muss er nach Ablauf der Brühzeit etwas tun, um den Brühvorgang zu unterbrechen.

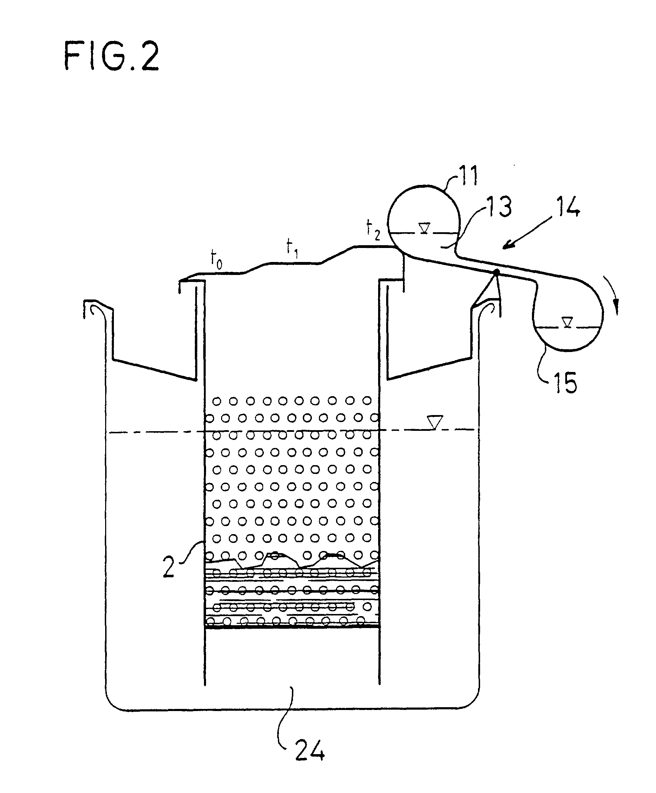

In Figur 2 ist dieselbe Vorrichtung im Verlaufe des Brühens gezeigt, wobei hier die kürzeste Brühzeit t₂ vorgewählt wurde, indem der Bereich des Zeitstellgliedes mit dem höchsten Rand t₂ der Wippe 14 zugewandt ist. Die Wippe 14 ist im Vergleich zur Auflage beim Randbereich t₁ viel stärker geneigt und entsprechend rascher fliesst das Medium 13 aus dem Hohlkörper 11 in den Hohlkörper 15. Damit wird der als Beschwerungskörper wirkende Hohlkörper 11 rascher erleichtert und entsprechend vermag das auf den Aufnahmebehälter 2 oder das Brühsieb wirkende Gewicht dessen Auftrieb nicht mehr zu kompensieren. In der Folge schwimmt der Aufnahmebehälter 2 in der Brühflüssigkeit stetig weiter auf.

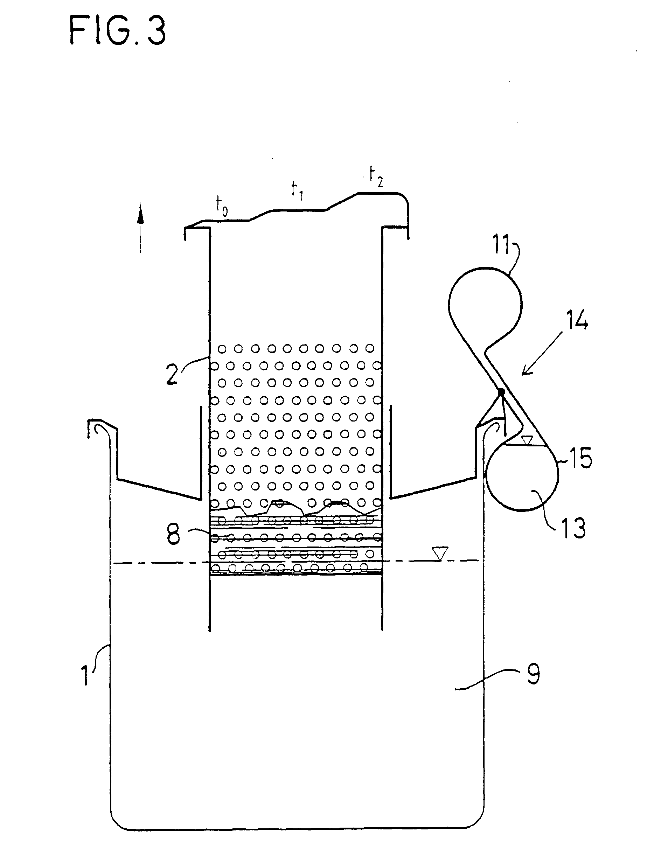

Die Figur 3 zeigt die Situation nach Beendigung des Brühvorganges. Die Wippe 14 ist seitlich weggeschwenkt und das gesamte Medium 13, das sich anfänglich im Hohlkörper 11 befand, liegt jetzt im Hohlkörper 15. Sobald nämlich durch die Entleerung des Hohlkörpers 11 dessen Gewicht kleiner wurde als der Auftrieb des Brühsiebes 2, begann sich der Aufnahmebehälter 2 anzuheben und schwenkte die Wippe 14 seitlich weg. Damit wurde der Weg freigegeben, dass sich der Aufnahmebehälter 2 kraft seines Auftriebs schliesslich weiter aus dem Brühgefäss 1 erhob und somit auch das Brühgut 7 fast oder vollständig aus der Brühflüssigkeit 9 herausgehoben wurde. Damit die Brühflüssigkeit 9 in dieser Stellung des Brühsiebes 2 vollständig vom Brühgut getrennt ist, kann das Brühsieb 2 in seinem unteren Randbereich, der hier noch in die Brühflüssigkeit 9 eingetaucht geblieben ist, eine durch gehende Wandung ohne Perforation aufweisen.

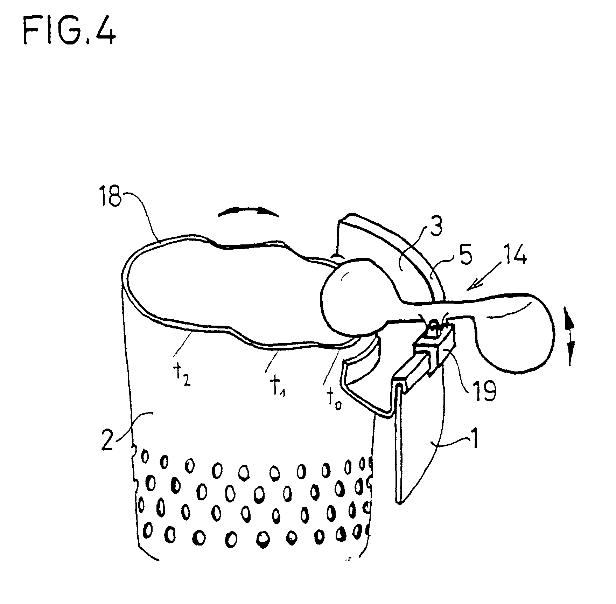

Die Figur 4 zeigt eine perspektivische Darstellung der speziellen Ausführungsvariante der Wippe 14 mit dem Beschwerungskörper, sowie des Einsatzringes 3 mit der Kulisse 18 für das Einstellen der Brühzeit. Hier weist der Aufnahmebehälter 2 gerade selbst einen Rand 18 auf, der eine Kulisse bildet, welche als Zeitstellglied für die hier drei einstellbaren Varianten t₀, t₁, t₂ wirken kann. Durch Verdrehen des Aufnahmebehälters 2 im Brühgefäss 1 kann die gewünschte Randhöhe gegenüber der Wippe 14 liegend angeordnet werden. Die Wippe 14 ist hier auf den Rand 5 des Einsatzringes 3 aufsteckbar. Hierzu weist sie einen Klemmfuss 19 auf, der oben eine horizontale Schwenkachse aufweist, an welcher die Wippe 14 schwenkbar gelagert ist.

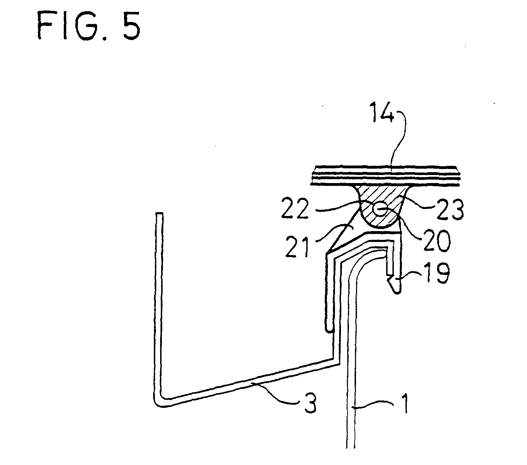

Dieser Klemmfuss 19 mit Schwenkachse ist in Figur 5 auf den Rand des Einsatzringes 3 aufgesteckt in einer Detailansicht von der Seite her gesehen in einem Querschnitt gezeigt. Die Schwenkachse 20 kann zum Beispiel zusammen mit dem Klemmfuss 19 ein einstückiges Kunststoffteil sein, wobei die Schwenkachse 20 von zwei separaten, voneinander wegweisenden Stummeln 20 gebildet wird, die je an einem Steg 21 angeformt sind. Die beiden Stege 21 können leicht zueinander hin gedrückt werden, sodass die Stummel 20 in die Löcher 22 am Tragelement 23 der Wippe 14 eingesetzt werden können.

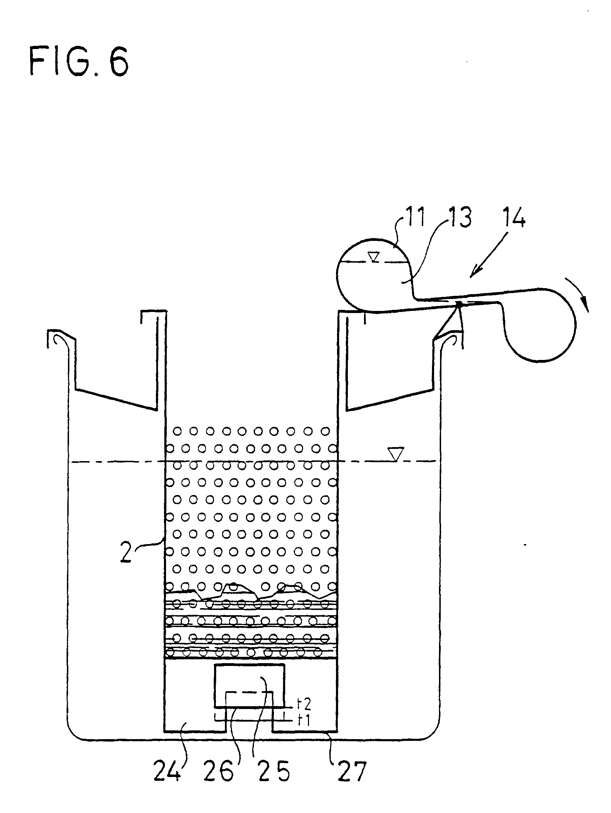

Die Figur 6 zeigt eine alternative Ausführung einer Vorrichtung zum Brühen von Getränken. Auch hier wird ein Beschwerungskörper 11 zum Niederhalten des Brühsiebes 2 eingesetzt, der sich durch das Abfliessen oder Abrinnen des in ihm befindlichen Mediums 13 kontinuierlich erleichtert. Im Unterschied zu den Ausführungsvarianten, die in den Figuren 1 bis 4 gezeigt sind, wird hier aber die Brühzeit nur durch die Veränderung des Auftriebes des Aufnahmebehälters 2 eingestellt. Hierzu weist der hohle, untere Bereich 24 des Aufnahmebehälters in seiner Seitenwand einen dichtenden Schieber 25 auf, der auf- und abwärts verschoben werden kann. Je weiter dieser Schieber 25 nach oben geschoben wird, umso höher liegt seine Unterkante, über dieselbe beim Eintauchen die unterhalb dieser Kante befindliche Luft aus dem Hohlraum entweicht und in der Brühflüssigkeit aufsteigt. Wenn der Schieber 25 ganz unten ist, und seine Unterkante 26 bündig mit der Unterkante 27 des Aufnahmebehälters 2 ist, wird die grösste Luftblase im Hohlraum 24 eingeschlossen. Der entsprechend grosse Auftrieb drückt die Wippe 14 in eine starke Schräglage und entsprechend rasch rinnt oder fliesst das Medium 13 aus dem Hohlkörper 11, wonach dieser bald vom aufsteigenden Aufnahmebehälter beiseitegeschoben und weggeschwenkt wird. In der hier gezeigten obersten Position wird demgegenüber die kleinste Luftmenge eingeschlossen. Der Auftrieb reicht gerade aus, dass die Wippe 14 in eine schwache Schräglage geschwenkt wird, und das Medium langsam aus dem Hohlkörper 11 rinnt oder fliesst. Nach der Zeitperiode t₂ ist der Brühvorgang beendet. Schliesslich markiert t₁ noch eine Zwischenposition für die mittlere Brühzeit t₁. Der Schieber kann jedoch auch in beliebige Zwischenpositionen geschoben werden.

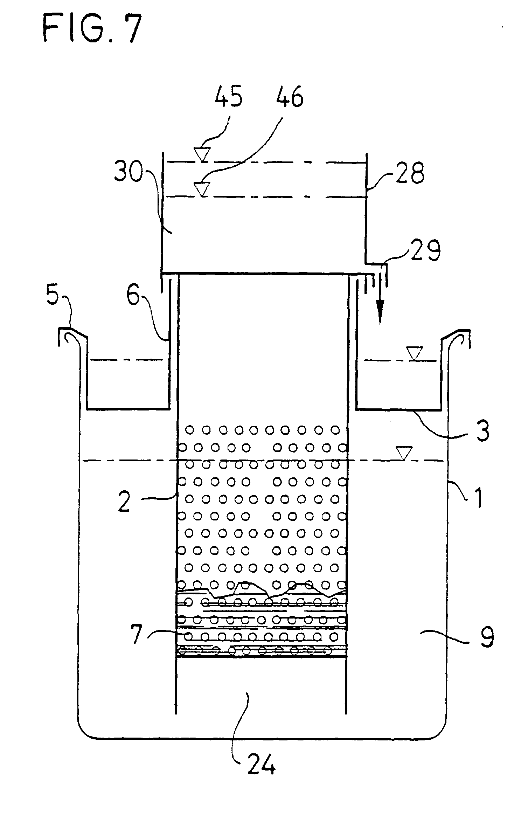

Die Figur 7 zeigt eine weitere Ausführung einer Vorrichtung zum Brühen von Getränken. Hier ist der Aufnahmebehälter 2 ein perforiertes Kunststoff- oder Blechgefäss, das auf seiner Unterseite einen unten offenen Hohlraum 24 aufweist und in einem auf den Brühgefäss-Rand stülpbaren Einsatzring 3 mit äusserem Aufsetzrand 5 und innerem Hals 6 geführt ist. Dieser Aufnahmebehälter 2 kann aber auch selbst leichter als Wasser sein, indem er aus einem entsprechenden Material gefertigt ist oder einen Schwimmkörper aufweist. Der Beschwerungskörper besteht hier aus einem oben offenen, mit Wasser gefüllten Gefäss 28, das auf dem Aufnahmebehälter 2 steht und unten eine Ausflussöffnung 29 aufweist, durch welche das im Beschwerungskörper enthaltene Wasser 30 in den Einsatzring 3 abfliessen kann. Das Gefäss 28 wird in den meisten Fällen ein Aufnahmevolumen von 100ml bis 200ml aufweisen, je nach dem Auftrieb und dem Gewicht des eingesetzten Aufnahmebehälters 2. Der Einsatzring kann ebenfalls perforiert sein, sodass das aus dem Gefäss 28 abfliessende Wasser in die Brühflüssigkeit 9 abtropft. Wegen der geringen Quantität dieses Beschwerungswassers hat das kaum einen Einfluss auf den Tee, jedoch wird dadurch die Handhabung der Vorrichtung erleichtert, weil sonst das im Einsatzring 3 aufgefangene Wasser beim Entfernen des Einsatzringes 3 verschüttet werden könnte. Zum Einsatz wird der mit Brühgut 7 gefüllte Aufnahmebehälter 2 durch den Einsatzring 3 in die Brühflüssigkeit 9 im Brühgefäss 1 eingetaucht, und das Gefäss 28 wird mit einem Füllstand entsprechend der gewünschten Brühzeit auf den Aufnahmebehälter 2 aufgesetzt. Fertig! In der Figur sind zwei Füllstände 45,46 gezeigt, nämlich einen 45 für eine maximale Brühzeit und einen 46 für eine reduzierte Brühzeit. Je mehr Flüssigkeit aus dem Gefäss 28 durch die Öffnung 29 in den Einsatzring 3 abfliessen muss, umso länger dauert es, bis das Gefäss 28 und somit der Aufnahmebehälter 2 vom Gewicht des im Gefäss 28 befindlichen Wassers entlastet ist, sodass der Auftrieb des Aufnahmebehälters 2 sein Gewicht und jenes des Gefässes 28 übersteigt. Wenn dieser Punkt erreicht ist, beginnt der Aufnahmebehälter 2 aufzusteigen, wonach der Brühvorgang beendet wird, sobald das Brühgut 7 aus der Brühflüssigkeit 9 herausgehoben ist.

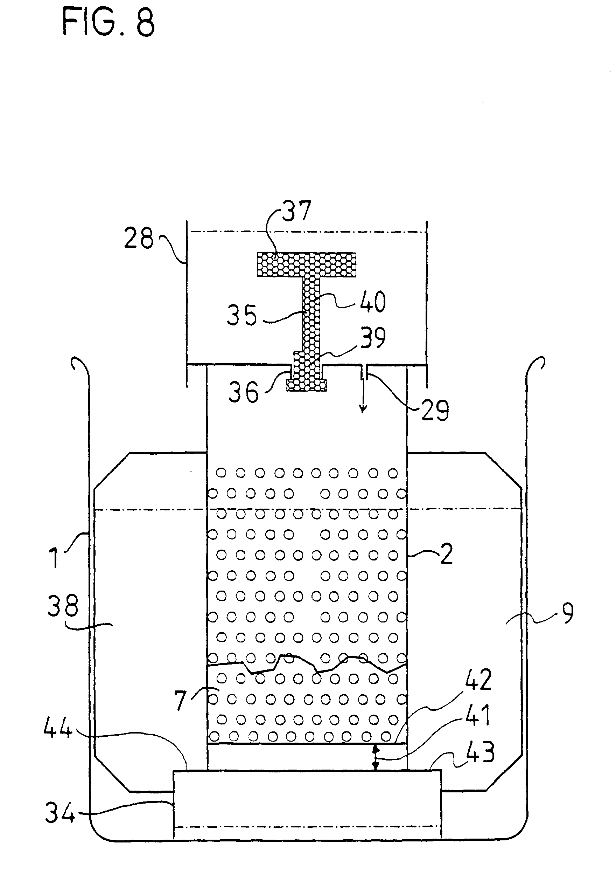

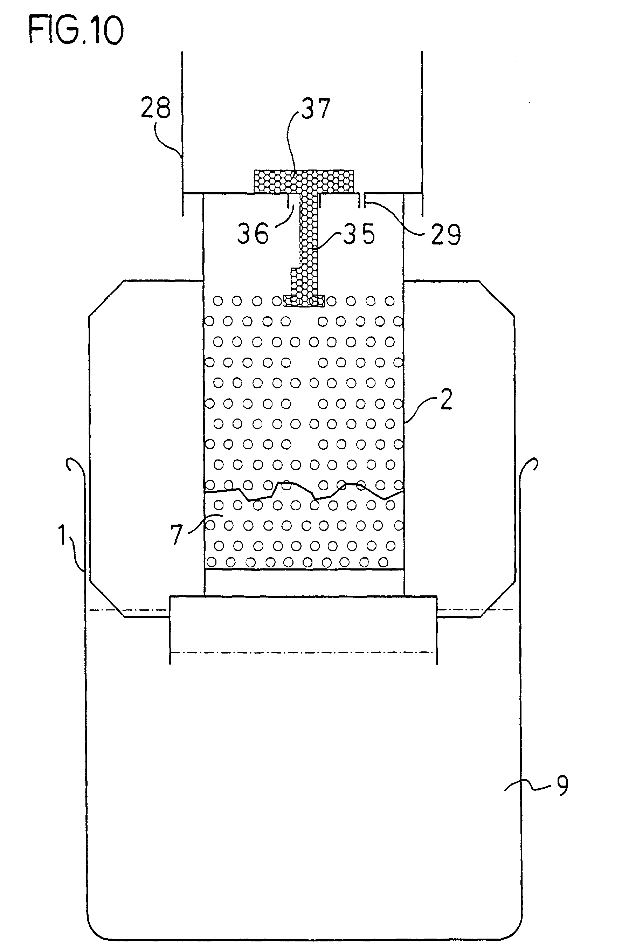

In Figur 8 ist eine verfeinerte Ausführungsvariante der Vorrichtung mit einem Flüssigkeitsbehälter als Beschwerungskörper in einem Querschnitt dargestellt, wobei in dieser Figur zunächst die Situation beim Starten des Brühvorganges dargestellt ist. Der Beschwerungskörper besteht hier wieder aus einem oben offenen, mit Wasser gefüllten Gefäss 28, das auf dem Aufnahmebehälter 2 steht und unten eine Ausflussöffnung 29 aufweist, durch welche das im Beschwerungskörper enthaltene Wasser 30 nun aber nicht in einen Einsatzring abtropft, sondern direkt in die sich oberhalb des Brühgutes befindliche Brühflüssigkeit. Der Aufnahmebehälter 2 steht auf einem unten offenen Sockel 34, der beim Eintauchen in die Brühflüssigkeit eine Luftblase einschliesst, die für den Auftrieb des Aufnahmebehälters 2 in der Brühflüssigkeit sorgt. Dieser unten offene Sockel 34, der dieselbe Funktion erfüllt wie der Hohlraum 24 in Figur 1, kann aber auch als geschlossener Hohlraum ausgeführt sein, oder aus einem geschäumten Kunststoff, oder aus Kork bestehen, um den nötigen Auftrieb zu erzeugen. Zwischen der Oberkante 43 dieses den Auftrieb erzeugenden Teils 34 und dem unteren Ende 42 der Perforierung wird ein Abstand 41 gewählt, der sicherstellt, dass bei aufgeschwommenem Aufnahmebehälter 2, das Brühgut 7 vollständig von der Brühflüssigkeit isoliert ist. Zur Führung des Aufnahmebehälters 2 im Brühgefäss 1 ist der Aufnahmebehälter 2 mit radial von ihm abstehenden Führungsrippen 38 versehen. An diesen Führungsrippen 38 sind ausserdem Ausnehmungen 44 zur Aufnahme und Fixierung des Sockels 34 vorhanden. Als Besonderheit ist im Gefäss 28 ein Stöpsel 35 angeordnet, der ein nach unten auskragendes Stöpselloch 36 im Gefässboden von dessen Unterseite her dichtend verschliesst. Der Stöpsel 35 ist als Schwimmer ausgeführt, indem er aus einem leichten Material hergestellt ist und oben zur Vergrösserung seines Auftriebs eine Schwimmerplatte 37 aufweist. In seinem unteren Bereich hat der Stöpsel 35 einen runden Querschnitt 39 und im oberen Bereich einen angeschnittenen, runden Querschnitt 40. Zum Starten des Brühvorganges wird der Aufnahmebehälter 2 mit dem Brühgut 7 in das mit Brühflüssigkeit gefüllte Brühgefäss 1 eingesetzt. Der Aufnahmebehälter 2 taucht wegen des Auftriebs des Sockels 34 nur wenig in die Brühflüssigkeit ein. Diese Situation ist in Figur 10 ersichtlich und entspricht auch der Situation nach Beendigung des Brühvorganges. Anschliessend wird das Gefäss 28 aufgesetzt und dieses gemäss der gewünschten Brühzeit mit mehr oder weniger Flüssigkeit gefüllt. Durch das Füllen des Gefässes 28 sinkt der Aufnahmebehälter 2 im Brühgefäss 1 ab, bis er unten aufsteht, weil ja das Gewicht des gefüllten Gefässes 28 grösser ist als der wirkende Auftrieb. Der Stöpsel 35 mitsamt seiner Schwimmerplatte 37 wird indessen überflutet. Er steigt wegen der Auftriebskraft der Schwimmerplatte 37 nach oben und verschliesst dabei das Stöpselloch 36 von unten her. Fortan tropft oder rinnt Wasser langsam durch den Ausfluss 29 in die Brühflüssigkeit. Diese Situation is in Figur 8 dargestellt.

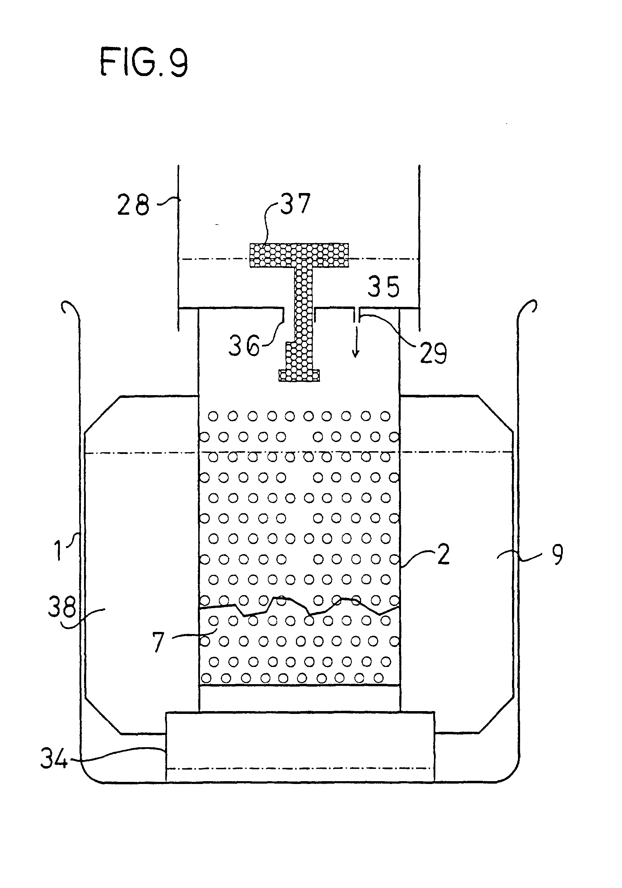

Sobald der Wasserpegel im Gefäss 28 auf ein Niveau abgesunken ist, bei welchem der Stöpsel 35 das Stöpselloch 36 nicht mehr zu verschliessen vermag, läuft das Wasser rasch durch das grosse Stöpselloch 36 in die Brühflüssigkeit ab und erniedrigt das Gewicht des Beschwerungskörpers rasch, sodass der Aufnahmebehälter 2 ebenso rasch angehoben wird. Diese Situation, kurz vor dem Erreichen des Brühzeitablaufs, ist in Figur 9 dargestellt.

Der Beschwerungskörper wird also nach Ablauf der gewünschten Brühzeit abrupt leichter und der Aufnahmebehälter 2 schwimmt entsprechend rasch auf und hebt das Brühgut 7 vollständig aus der Brühflüssigkeit 9, wie das in Figur 10 gezeigt ist. Der Stöpsel 35 hängt nach der vollständigen Entleerung des Gefässes 28 mit seiner oberen Abschlussplatte im Stöpselloch 36 und das Brühgut 7 ist vollständig aus der Brühflüssigkeit 9 herausgehoben. Es wird mit dieser Stöpsel-Einrichtung erreicht, dass das Brühgut 7 nicht über die gesamte Brühzeit hinweg langsam und stetig aus dem Brühflüssigkeit 9 herausgehoben wird, sondern dass vielmehr das gesamte Brühgut 7 während der ganzen Brühzeit in der Flüssigkeit 9 verbleibt, und nach deren Ablauf als Ganzes rasch und vollständig aus der Flüssigkeit gehoben wird. Das rasche Aufsteigen in einigen Sekunden bringt den Vorteil, dass der Brühvorgang exakt unterbrochen wird. Diese abrupte Unterbrechung ist für den Teetrinker und Konsumenten das Indiz für eine optimale Teezubereitung, die der manuellen identisch ist, aber hier eben automatisch erfolgt.

## Patentansprüche

1. Vorrichtung zum Brühen von Getränken, bestehend aus einem Brühgefäss (1) und einem zugehörigen Brühsieb (2) in Form eines wasserdurchlässigen Aufnahmebehälters (2) für das Brühgut (7), der spezifisch leichter als Wasser ist oder beim Eintauchen in die Brühflüssigkeit unter Einschluss einer Luftblase in das Brühgefäss (1) einsetzbar ist, sodass er in der Brühflüssigkeit (9) aufschwimmt, ***dadurch gekennzeichnet,* dass** Beschwerungsmittel (11;28) in Form eines Hohlkörpers (11) oder Gefässes (28) vorhanden sind, aus denen ein in ihnen enthaltenes Medium ablassbar ist, und mittels derer der Aufnahmebehälter (2) für das Brühgut (7) während einer einstellbaren Zeitperiode mit eingetauchtem Brühgut (7) in der im Brühgefäss (1) befindlichen Brühflüssigkeit (9) eingetaucht haltbar ist und die nach Ablauf der vorbestimmten Zeitperiode durch kontinuierliches Erleichtern soweit entlastbar sind, dass der Aufnahmebehälter (2) kraft seines Auftriebs aufschwimmt.

2. Vorrichtung nach Anspruch 1, ***dadurch gekennzeichnet*, dass** der Aufnahmebehälter (2) ein perforiertes Kunststoff- oder Blechgefäss (2) ist, das auf seiner Unterseite einen Hohlraum (24) oder einen Schwimmkörper aus geschäumtem Kunststoff oder Kork aufweist und im Brühgefäss (1) geführt ist, und dass die Beschwerungsmittel (28) durch ein oben offenes, mit Wasser gefülltes Gefäss (28) gebildet ist, das auf den Aufnahmebehälter (2) aufsetzbar ist und unten eine Ausflussöffnung (29) aufweist, durch welche das im Gefäss (28) zur anfänglichen Beschwerung des Aufnahmebehälters (2) enthaltene Wasser (30) abzufliessen bestimmt ist.

3. Vorrichtung nach Anspruch 2, ***dadurch gekennzeichnet,* dass** das Gefäss (28) zusätzlich zur Abflussöffnung (29) ein Stöpselloch (36) mit zugehörigem schwimmenden Stöpsel (35) aufweist, welcher das Stöpselloch (36) von unten her abdichtet, derart, dass nach Unterschreiten eines bestimmten Pegelstandes im Gefäss (28) der Stöpsel (35) das Stöpselloch (36) freigibt, sodass das Gefäss (28) durch das Stöpselloch (36) entleerbar ist.

4. Vorrichtung nach einem der vorhergehenden Ansprüche, ***dadurch gekenn*zeichnet, dass** zwischen dem unteren Ende (42) der Perforierung des Aufnahmebehälters (2) und dem Pegelstand der Brühflüssigkeit (9) bei aufschwimmendem Aufnahmebehälter ein Abstand eingehalten ist, sodass sichergestellt ist, dass bei aufgeschwommenem Aufnahmebehälter (2) das Brühgut (7) vollständig von der Brühflüssigkeit (9) isoliert ist.

5. Vorrichtung zum Brühen von Getränken nach Anspruch 1, ***dadurch gekennzeichnet*, dass** die Mittel durch einen Beschwerungskörper (11) gegeben sind, der einen Hohlkörper (11) einschliesst, der mit einem rinnfähigen oder fliessfähigen Medium (13) gefüllt ist, und dass dieses Medium (13) aus einer Öffnung (12) im Hohlkörper (11) mit einstellbarer Rinn- oder Fliessgeschwindigkeit in einen anderen Hohlkörper (15) ablassbar ist, sodass der Beschwerungskörper (11) kontinuierlich erleichtert wird und schliesslich sein Gewicht den Auftrieb des eingetauchten Aufnahmebehälters (2) unterschreitet.

6. Vorrichtung nach Anspruch 5, ***dadurch gekennzeichnet,* dass** der Aufnahmebehälter (2) ein perforiertes Kunststoff- oder Blechgefäss (2) ist, das auf seiner Unterseite einen unten offenen, seitlich dichten Hohlraum (24) zum Einschluss einer Luftblase beim Eintauchen, oder einen Schwimmkörper aus geschäumtem Kunststoff oder Kork aufweist, und das in einem auf den Brühgefäss-Rand stülpbaren Einsatzring (3) mit äusserem Aufsetzrand (5) und innerem Hals (6) geführt ist, und dass der Beschwerungskörper (11) als Wippe (14) mit zwei endseitig angeordneten und miteinander über einen Kanal (16) verbundenen Hohlkörpern (11,15) ausgeführt ist, wobei diese Wippe (14) in der Vertikalebene um den äusseren Rand (5) des Einsatzringes (3) schwenkbar ist, wobei der dem Brühgefäss (1) zugewandte Hohlkörper (11) in der Ausgangslage den Aufnahmebehälter (2) beschwert, und der äussere Hohlkörper (15) in einer tieferen Position angeordnet ist, sodass das Medium (13) in den letzteren fliesst oder rinnt.

7. Vorrichtung nach einem der Ansprüche 5 oder 6, ***dadurch gekennzeichnet,* dass** auf den Aufnahmebehälter (2) ein Ring (17) aufgesteckt ist, dessen Rand (18) unterschiedlich hoch ist, und der auf dem Aufnahmebehälter (2) verdrehbar ist, sodass sich verschieden hohe, verstellbare Ausgangspositionen ergeben, an welchen der innere Hohlkörper (11) auf dem Ring (17) aufliegt, wodurch das Medium (13) einstellbar verschieden schnell aus dem Hohlkörper (11) abfliesst oder abrinnt.

8. Vorrichtung nach einem der Ansprüche 6 oder 7, ***dadurch gekennzeichnet,* dass** die Wippe (14) wegnehmbar auf den Rand (5) des Einsatzringes (3) steckbar ist, und dass die Hohlkörper (11;15) sowie der sie verbindende Kanal (16) aus einem abgeschlossenen Kunststoff- oder Glaskörper nach Art einer Sanduhr bestehen.

9. Vorrichtung nach einem der Ansprüche 6 oder 8, ***dadurch gekennzeichnet,* dass** zum Einstellen der Brühzeit der unten offene, seitlich dichte Hohlraum (24) am Aufnahmebehälter (2) mittels eines an der Seitenwand dichten, aufund abwärts bewegbaren Schiebers (25) einstellbar ist, indem die Unterkante (26) des Schiebers (25) die jeweils oberste Stelle des unteren Randes des Hohlraumes (24 ) bildet, sodass je nach Lage des Schiebers (25) beim Eintauchen des Aufnahmebehälters (2) mehr oder weniger Luft im Hohlraum (24) einschliessbar ist.

## Claims

1. A device for brewing beverages comprising a brewing receptacle (1) and an associated brewing sieve (2) in the form of a porous holder (2) for the material requiring brewing (7), which has a lighter specific weight than water, or, during the process of being submerged in the brewing liquid, can be introduced into the brewing receptacle (1) in such a way as to entrap a bubble of air, so that it rises up in brewing liquid (9) ***characterised in that*** weighing-down means (11;28) in the form of a hollow body (11) or a container (28) are provided, out of which a medium contained in them can be drained away, and by means of which holder (2) for the material requiring brewing (7) can be kept submerged, together with the material requiring brewing (7), in the brewing liquid (9) in brewing receptacle (1) for a pre-set length of time, and which, at the end of the pre-set period, can be thus far relieved by continuous lightening so that holder (2) rises up on account of its own buoyancy.

2. The device of claim 1, ***characterised in that*** holder (2) is a perforated plastic or sheet metal container (2) which, on its underside, has a hollow space (24) or a float made from foamed plastic or cork and is guided inside brewing receptacle (1), and **in that** the weighing-down means (28) are formed by an upwardly open container (28) filled with water, which can be placed on top of holder (2) and has an opening (29) at the bottom, through which the water (30) in the container (28) for initially weighing down holder (2) is intended to flow away.

3. The device of claim 2, ***characterised in that*** container (28), in addition to opening (29), also has a stopper hole (36) with an associated floating stopper (35), which seals stopper hole (36) from underneath so that, once the water falls below a certain level in container (28), stopper (35) comes out of stopper hole (36) so that container (28) can be drained through stopper hole (36).

4. The device of one of the preceding claims, ***characterised in that*** when holder (2) has floated to the surface, a gap is observed between the bottom end (42) of the perforations in holder (2) and the level of brewing liquid (9), thereby ensuring that once holder (2) has floated right to the top, the material requiring brewing (7) is completely isolated from brewing liquid (9).

5. The device for brewing beverages of claim 1, ***characterised in that*** the weighing-down element (11) comprises a hollow body (11) which is filled with a medium (13) that will run or flow, and **in that** this medium (13) can be made to run or flow at a pre-selectable speed through an opening (12) out of hollow body (11) and into another hollow body (15), so that weighing-down element (11) grows continuously lighter until its weight falls below the buoyant force acting on submerged holder (2).

6. The device of claim 5, **characterised in that** holder (2) is a perforated plastic or sheet metal container (2) which, on its underside, has a downwardly open, laterally closed off hollow space (24) for entrapping an air bubble as it is submerged, or has a float made from foamed plastic or cork, and which is guided inside an insert ring (3) with an outer support edge (5) and an inner neck (6) that can be clipped over the edge of the brewing receptacle, and **in that** weighing-down element (11) is contrived as a rocker (14) with, disposed at each end and connected with each other via a channel (16), two hollow bodies (11,15), with this rocker (14) being pivotable in the vertical plane around the outer edge (5) of insert ring (3), with, in the starting position, the hollow body (11) closest to brewing receptacle (1) weighing down holder (2), and the outer hollow body (15) being disposed in a lower position so that medium (13) flows or runs into the latter.

7. The device according to one of claims 5 or 6, ***characterised in that*** placed on top of holder (2) there is a ring (17) with an edge (18) of varying heights, which can be twisted on top of holder (2) to produce adjustable starting positions of different heights, via which the inner hollow body (11) abuts against ring (17), thereby ensuring that medium (13) flows or rune out of hollow body (11) at different, pre-selectable speeds.

8. The device of one of claims 6 or 7, ***characterised in that*** rocker (14) is removably clipped onto edge (5) of insert ring (3), and **in that** the hollow bodies (11,15) and the channel (16) connecting them are made from an enclosed plastic or glass element in the manner of an hourglass.

9. The device of one of claims 6 or 8, ***characterised in that*** to set the brewing time, the downwardly open, laterally sealed hollow space (24) on holder (2) can be adjusted by means of a watertight vertically displaceable slide (25) in the side wall, **in that** the bottom edge (26) of slide (25) forms the uppermost point in the bottom edge of hollow space (24), so that, depending on the position of slide (25), more or less air can be trapped in hollow space (24) when holder (2) is submerged.

## Revendications

1. Dispositif pour faire infuser des boissons, composé d'un récipient d'infusion (1) et d'un tamis d'infusion (2) correspondant, constitué par un récipient (2), perméable à l'eau et destiné à la substance à infuser (7), ce récipient étant spécifiquement plus léger que l'eau ou pouvant, au moment de la plongée dans le liquide d'infusion, être introduit dans le récipient d'infusion (1) en enfermant une bulle d'air, de sorte qu'il flotte sur le liquide d'infusion (9), ***caractérisé en ce qu'***il existe des moyens d'alourdissement (11, 28), constitués par un corps creux (11) ou un réservoir (28), à partir desquels un fluide contenu par eux peut être évacué et au moyen desquels le récipient (2) destiné à la substance à infuser (7) peut être maintenu plongé, pendant une période de temps réglable, avec la substance à infuser (7), plongé dans le liquide d'infusion (9) se trouvant dans le récipient d'infusion (1), ces moyens d'alourdissement pouvant, après l'écoulement de la période de temps déterminée à l'avance, être déchargés par un allègement continu, de sorte que le récipient (2) flotte sur le dessus, sous l'action de sa poussée ascensionnelle.

2. Dispositif suivant la revendication 1, ***caractérisé en ce que*** le récipient (2) est un récipient perforé en matière plastique ou en tôle, qui comporte sur sa face inférieure une cavité (24) ou un corps flottant en mousse de matière plastique ou en liège et est guidé dans le récipient d'infusion (1) et que les moyens d'alourdissement (28) sont constitués par un réservoir (28) ouvert et rempli d'eau, ce réservoir pouvant être posé sur le récipient (2) et comportant dans sa partie inférieure une ouverture d'évacuation (29), par laquelle l'eau (30) contenue dans le réservoir (28) pour alourdir au commencement le récipient 2 est destinée à s'écouler.

3. Dispositif suivant la revendication 2, ***caractérisé en ce que*** le réservoir (28) comporte, en plus de l'ouverture d'évacuation (29), un orifice (36) à bouchon, recevant un bouchon flottant correspondant (35), qui ferme par le bas l'orifice (36) de manière étanche, de sorte qu'après le dépassement d'un niveau déterminé vers le bas dans le réservoir (28), le bouchon (35) libère son orifice (36), si bien que le réservoir (28) peut être vidé par l'orifice (36).

4. Dispositif suivant une des revendications précédentes, *caractérisé en ce qu*'entre l'extrémité inférieure (42) du groupe de perforations du récipient (2) et le niveau du liquide d'infusion (9) une distance est maintenue quand le récipient flotte à la surface du liquide, ce qui garantit que, quand ce récipient (2) flotte à la surface, la substance à infuser (7) est complètement isolée du liquide d'infusion (9).

5. Dispositif pour infuser des boissons suivant la revendication *1, **caractérisé en ce que*** les moyens d'alourdissement sont constitués par un corps d'alourdissement (11), comprenant un corps creux (11), rempli d'un fluide (13) pouvant couler ou s'écouler et que ce fluide (13) peut s'évacuer par une ouverture (12) du corps creux (11), à une vitesse réglable d'écoulement, dans un autre corps creux (15), de sorte que le corps d'alourdissement (11) s'allège continuellement et que son poids devient finalement inférieur à la poussée ascensionnelle du réservoir (2) plongé dans le liquide.

6. Dispositif suivant la revendication 5, ***caractérisé en ce que*** le récipient (2) est un récipient perforé en matière plastique ou en tôle, qui comporte sur sa face inférieure une cavité (24) ouverte vers le bas et étanche latéralement, destinée à enfermer une bulle d'air au moment de la plongée ou un corps flottant en mousse de matière plastique ou en liège, et qui est guidé dans une couronne d'insertion (3) pouvant passer par dessus le bord du récipient d'infusion et présentant un bord d'appui extérieur (5) et un col intérieur (6), cependant que le corps d'alourdissement (11) est constitué par une bascule (14), comportant deux corps creux (11, 15), reliés entre eux à leurs extrémités par un canal (16), cependant que cette bascule (14) peut basculer dans le plan vertical autour du bord extérieur (5) de la couronne d'insertion (3) et que le corps creux (11) tourné vers le récipient d'infusion (1) alourdit en position de départ le récipient (2) et que le corps creux extérieur (15) se trouve dans une position plus basse, de sorte que le fluide (13) coule ou s'écoule dans ce dernier.

7. Dispositif suivant une des revendications 5 ou 6, ***caractérisé* en ce *qu***'il est disposé sur le récipient (2) une bague (17), dont le bord (18) comporte différentes hauteurs, cependant qu'on peut faire tourner cette bague sur le récipient (2), de sorte qu'on obtient des positions de départ réglables de différentes hauteurs, à l'endroit desquelles le corps creux intérieur (11 ) repose sur la bague (17), de sorte que le fluide (13) s'écoule du corps creux (11) à différentes vitesses réglables.

8. Dispositif suivant une des revendications 6 ou 7, **caractérisé *en ce que*** la bascule (14) peut être enfichée sur le bord (5) de la couronne d'insertion (3) et être retirée et que les corps creux (11, 15) ainsi que le canal (16) qui les relie entre eux sont constitués par un corps fermé en matière plastique ou en verre, à la manière d'un sablier.

9. Dispositif suivant une des revendications 6 ou 8, ***caractérisé en ce que**,* pour le réglage du temps d'infusion, la cavité (24) ouverte dans le bas, étanche latéralement et disposée sur le récipient (2) est réglable au moyen d'un coulisseau (25), étanche sur la paroi latérale et mobile vers le bas, **en ce que** la face inférieure (26) du coulisseau (25) forme chaque fois l'endroit le plus haut du bord inférieur de la cavité (24), de sorte que, suivant la position du coulisseau (25) au moment de la plongée du récipient (2), plus ou moins d'air peut être enfermé dans la cavité (24).
